# EUROPÄISCHE PATENTANMELDUNG

(11) **EP 2 036 971 A1**
(43) Veröffentlichungstag der Anmeldung: **18.03.2009**
(21) Anmeldenummer: 08160173.4
(22) Anmeldetag: 11.07.2008
(51) Int. Cl.: C10M 155/02, C08G 77/445, C08G 77/452, C08G 77/46

(54) **Neuartige siloxanhaltige Blockcopolymere, Verfahren zu deren Herstellung und deren Verwendung für Schmiermittel**

(30) Priorität: 15.09.2007 DE 102007044148
(71) Anmelder: Evonik Goldschmidt GmbH, 45127 Essen (DE)
(72) Erfinder: Thum, Oliver, 40880, Ratingen (DE); Schwab, Peter, 45133, Essen (DE)

(57) **Zusammenfassung**

Die Erfindung betrifft neuartige Polyester-Polysiloxan-Blockcopolymere, ein Verfahren zu deren Herstellung sowie die Verwendung dieser Polymere als Basisöl oder als Additiv in Schmiermitteln, insbesondere Siliconölen.

## Beschreibung

Die Erfindung betrifft neuartige Polyester-Polysiloxan-Blockcopolymere sowie ein Verfahren zu deren Herstellung. Sie betrifft ferner die Verwendung dieser Polymere als Basisöl oder als Additiv in Schmiermitteln, insbesondere Siliconölen.

### Stand der Technik:

Schmierstoffe (auch: Schmiermittel) werden zur Schmierung eingesetzt und dienen zur Verringerung von Reibung und Verschleiß, sowie zur Kraftübertragung, Kühlung, Schwingungsdämpfung, Abdichtung und dem Korrosionsschutz.

Während jeder Bewegung kommt es zu einer Relativbewegung zwischen Bauteilen und damit zu einer Reibung zwischen den Oberflächen. Um Energieverlust und Verschleiß zu minimieren, ist es daher erforderlich, zwischen den bewegten Bauteilen ein Schmiermittel aufzubringen. Zur Schmierung werden üblicherweise Mineralöle, Poly-alpha-olefine, native Öle (z.B. Rapsöle), synthetische Esteröle, niedrigviskose Polyglykole und Siliconöle eingesetzt.

Siliconöle stellen gewöhnlich klare, farblose, neutrale, geruchsfreie, hydrophobe Flüssigkeiten dar mit einer Molekülmasse von 1.000 bis 150.000 g/mol, einer Dichte von 0,94 bis 1,07 g/cm³ und Viskositäten zwischen 10 und 1.000.000 mPa·s. Sie haben eine geringe Oberflächenspannung von 21,5 mN/m (bei 25 °C) oder weniger. Sie sind an der Luft dauerwärmebeständig bis ca. 180 °C, haben Stockpunkte von -80 °C bis -40 °C, und Siedepunkte von > 200 °C.

Siliconöle weisen zwischen -60 °C und bis 200 °C gute Schmiereigenschaften auf, die jedoch schlechter sind als die von Mineralölen. Insbesondere sind herkömmliche, für Mineralöle entwickelte Schmiermitteladditive (wie z.B. EP (extreme pressure)-Additive) in Siliconölen schlecht oder gar nicht löslich.

### Aufgabe der Erfindung:

Aufgabe der vorliegenden Erfindung war es daher, ein Schmiermitteladditiv für die Schmierung von beweglichen Teilen bereit zu stellen, welches das Eigenschaftsprofil von Siliconöl als Schmiermittel verbessert, insbesondere in Bezug auf die Reibungskoeffizienten im Grenzschmierbereich.

Überraschenderweise wurde nun gefunden, dass lineare Polyester-Polysiloxan-Blockcopolymere der allgemeinen Formel (I)

[(-S-P-)ₚ(-S-Q-)_{q}(-S-T-)ₜ]ᵣ (I)

wie in Anspruch 1 definiert, die genannte Aufgabe lösen und somit dem zuvor definierten Anforderungsprofil entsprechen.

Gegenstand der vorliegenden Erfindung sind daher lineare Polyester-Polysiloxan-Blockcopolymere, ein Verfahren zu deren Herstellung, deren Verwendung sowie Schmiermittel, die diese Polyester-Polysiloxan-Blockcopolymere aufweisen, wie sie unter anderem in den Ansprüchen beschrieben werden.

Die erfindungsgemäßen Blockcopolymere haben den Vorteil, dass sie als Additive den Reibungskoeffizienten von Siliconöl im Grenzschmierbereich deutlich verbessern.

Die erfindungsgemäßen Polyester-Polysiloxan-Blockcopolymere, das erfindungsgemäße Verfahren zu ihrer Herstellung sowie deren Verwendung werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören.

Die erfindungsgemäßen linearen Polyester-Polysiloxan-Blockcopolymere der allgemeinen Formel (I)

[(-S-P-)ₚ(-S-Q-)_{q}(-S-T-h)ₜ]ᵣ (I)

in denen die Einheiten (-S-P-), (-S-Q-) und (-S-T-) in beliebiger Reihenfolge miteinander verknüpft sind und in denen
p = 1 bis 10, vorzugsweise 1 bis 3,
q = 1 bis 10, vorzugsweise 1 bis 3,
t = 0 bis 10, vorzugsweise 1 bis 3,
r = 1 bis 100, vorzugsweise 5 bis 20,
und r*p ≥ 3 und r*q ≥ 3 ist, zeichnen sich dadurch aus, dass S eine zweiwertige Siloxan-Einheit der allgemeinen Formel (II) 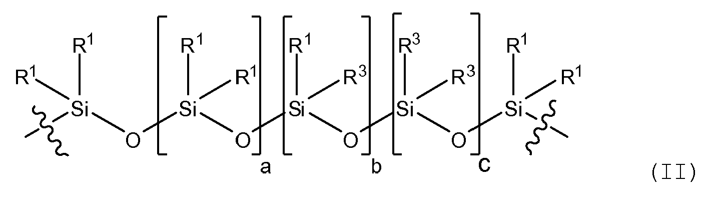 wobei
- N =: a + b + c + 2 = 3 bis 850, vorzugsweise 6 bis 300, bevorzugt 6 bis 100,
- a =: 1 bis 800, vorzugsweise 4 bis 300, bevorzugt 4 bis 100,
- b =: 0 bis 10, vorzugsweise 0,
- c =: 0 bis 10, vorzugsweise 0,
- R¹: unabhängig voneinander gleich oder verschieden und ausgewählt aus folgender Gruppe sind: gesättigte oder ungesättigte, verzweigte oder unverzweigte Alkylreste mit 1 bis 30 C-Atomen, Alkaryl- oder Arylalkylreste mit 7 bis 30 C-Atomen, Arylreste mit 6 bis 30 C-Atomen, vorzugsweise Alkylreste mit 1 bis 4 C-Atomen oder Phenylrest, bevorzugt Methylrest,
- R³: unabhängig voneinander gleiche oder verschiedene Reste der allgemeinen Formel (IIa) 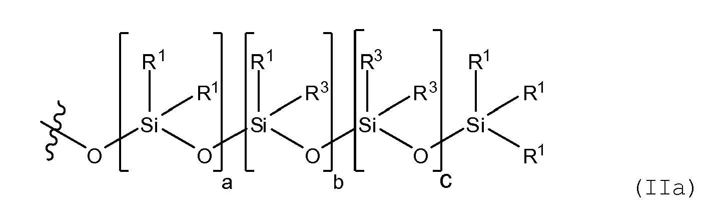
sind, mit
- a, b, c und R¹: wie für Formel (I) definiert und R³ = R¹ oder R³ gemäß der Definition in Formel (I),
- P: eine zweiwertige Polyester-Einheit der allgemeinen Formel (III) 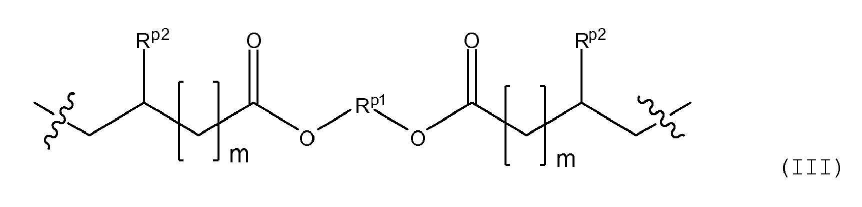
wobei
- R^{p2}: Wasserstoff oder Methyl, bevorzugt Wasserstoff,
- m: 0 bis 21, vorzugsweise 1 bis 19, bevorzugt 8,
- R^{p1}: ein zweibindiger organischer Rest der allgemeinen Formel (IIIa) oder (IIIb) 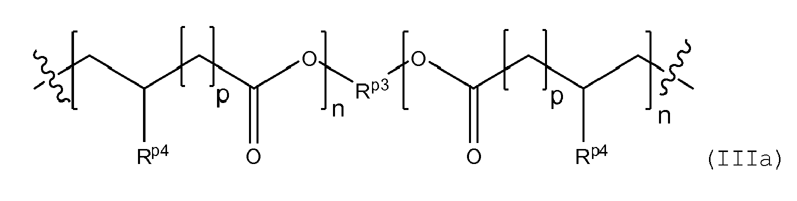 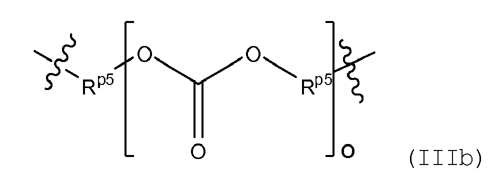
wobei
- n: 1 bis 100, bevorzugt 3 bis 20,
- o: 1 bis 100, bevorzugt 3 bis 20,
- p: 0 bis 17, vorzugsweise 2 bis 10, bevorzugt 3,
- R^{p3}: ein zweibindiger, verzweigter oder unverzweigter, gesättigter oder ungesättigter Alkylrest (zweibindiger Dialkylrest bzw. Alkylenrest) mit 2 bis 20 C-Atomen,
- R^{p4}: Wasserstoff oder Methyl, bevorzugt Wasserstoff,
- R^{p5}: ein zweibindiger, verzweigter oder unverzweigter, gesättigter oder ungesättigter Alkylkylrest (zweibindiger Dialkylrest bzw. Alkylenrest) mit 2 bis 20 C-Atomen,
- Q: ein zweibindiger, geradkettiger oder cyclischer, neutraler oder positiv geladener Alkylrest, der gegebenenfalls von Sauerstoffatomen unterbrochen ist und mindestens von einem, gegebenenfalls alkylsubstituierten, Stickstoffatom unterbrochen ist oder mindestens eine, gegebenenfalls alkylsubstituierte, Aminogruppe trägt,
- T: eine zweiwertige Polyether-Einheit der allgemeinen Formel (IV)

-R^{t}[C=O]ᵢ[O(C₂H_{4-d}R⁴_{d}O)ₑ(C_{f}H_{2f}O)gMₕ][C=O]ᵢR^{t}- (IV)
wobei
- R^{t}: ein zweibindiger, geradkettiger, verzweigter oder cyclischer Alkylrest mit 2 bis 23, bevorzugt 3 bis 20 C-Atomen, besonders bevorzugt 3 C-Atomen für i = 0 und 10 C-Atomen für i = 1,
- R⁴: jeweils unabhängig voneinander Wasserstoff oder Alkylrest oder Arylrest mit 1 bis 22 C-Atomen, der gesättigt oder ungesättigt sein kann und gegebenenfalls Sauerstoff- oder Stickstoffatome enthalten kann und
- d: jeweils unabhängig voneinander 0 bis 2,
- e: 0 bis 50, vorzugsweise 2 bis 25,
- f: 2 bis 4,
- g: 0 bis 50, mit der Maßgabe, dass e + g > 0, vorzugsweise > 3
- M: gleich oder verschieden und ein zweibindiger, gesättigter oder ungesättigter, linearer, verzweigter oder cyclischer, gegebenenfalls von Sauerstoff- oder Stickstoffatomen oder Carboxylgruppen unterbrochener und gegebenenfalls substituierter Kohlenwasserstoffrest an beliebiger Position innerhalb T und
- h: 0, 1 oder 2,
- i: 0 oder 1 ist.

Dabei ist dem Fachmann geläufig, dass die erfindungsgemäßen Polymere Endgruppen tragen. Solche Endgruppen sind in Bezug auf ihren Anteil und ihren Einfluss auf die makroskopischen Eigenschaften des Polymers im Wesentlichen ohne Bedeutung. Normalerweise handelt es sich bei den Kettenenden der erhaltenen Blockpolymere unabhängig voneinander um einen monofunktionalen Rest, der auf einem der verwendeten Blöcke S, P, Q oder T beruht. Es ist nicht auszuschließen, dass Verunreinigungen die Endgruppen darstellen, da diese nicht weiter reagieren.

Erfindungsgemäß bevorzugte Einheiten Q sind ausgewählt aus der Gruppe der Einheiten 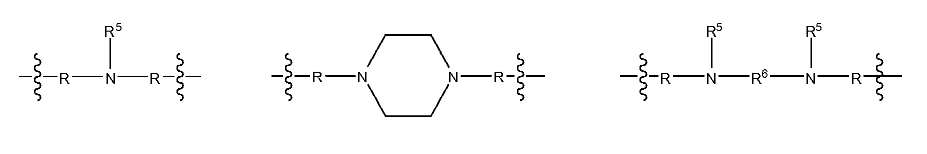 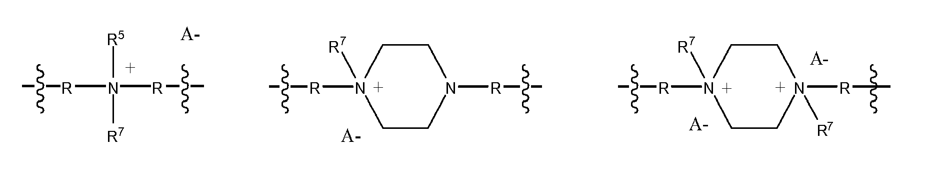 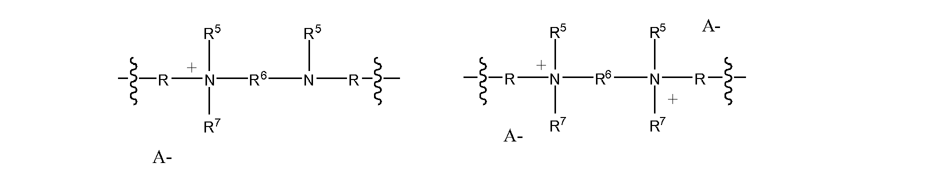 wobei
- R: eine zweiwertige, geradkettige, verzweigte oder cyclische, gegebenenfalls von Sauerstoffatomen unterbrochene Alkylkette,
- R⁵: jeweils unabhängig voneinander Alkyl oder Aryl mit 1 bis 22 C-Atomen ist, oder ein einwertiger Sauerstoff- und/oder Stickstoffatome enthaltender Kohlenwasserstoffrest ist,
- R⁶: ein zweiwertiger, gegebenenfalls verzweigter, gegebenenfalls Sauerstoff- und/oder Stickstoffatome enthaltender Kohlenwasserstoffrest ist,
- R⁷: jeweils unabhängig voneinander Wasserstoff oder Alkyl oder Aryl mit 1 bis 22 C-Atomen ist,
- A⁻: ein Gegenion zu den positiven Ladungen an den quartären Stickstoffgruppen ist, bevorzugt Chlorid, Iodid, Sulfat, Methylsulfat oder Ethylsulfat.

Besonders bevorzugt sind solche Q der nachfolgenden Formel (IX), 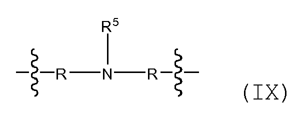 bei der R⁵ ein Wasserstoff oder Alkylrest, insbesondere ein Wasserstoff und R jeweils ein Propyl- oder 2-Methylpropylrest ist.

Erfindungsgemäß bevorzugte Einheiten T sind ausgewählt aus Einheiten der allgemeinen Formel (IV) mit e = 0, f = 2, g = 1 bis 50 und h = 0. Weiterhin bevorzugte Einheiten T sind ausgewählt aus Einheiten der allgemeinen Formel (IV) mit d = 1, e = 1 bis 50, g = 0, h = 0 und R³ = Methyl.

Bevorzugte Verbindungen der Formel (I) sind solche, bei denen jeweils die besonders bevorzugten Reste von S, P, Q und/oder T kombiniert enthalten sind.

Es ist dem Fachmann geläufig, dass die erfindungsgemäßen Verbindungen in Form eines Gemisches mit einer im Wesentlichen durch statistische Gesetze geregelten Verteilung vorliegen bzw. vorliegen können.

Die erfindungsgemäßen Polyester-Polysiloxan-Blockcopolymere der allgemeinen Formel (I) können auf jede erdenkliche Weise hergestellt werden. Vorzugsweise werden die erfindungsgemäßen Polyester-Polysiloxan-Blockcopolymere der allgemeinen Formel I mit dem nachfolgend beschriebenen erfindungsgemäßen Verfahren hergestellt.

Das erfindungsgemäße Verfahren zur Herstellung von Polyester-Polysiloxan-Blockcopolymere der allgemeinen Formel (I) zeichnet sich dadurch aus, dass Si-H Siloxane der allgemeinen Formel (V) 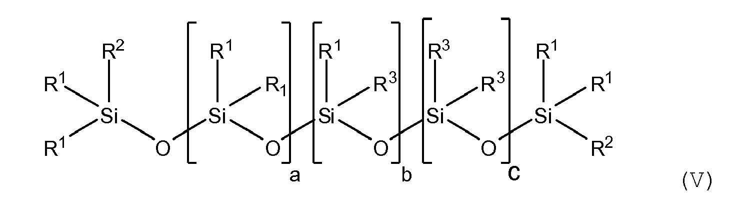 wobei
- N =: a + b + c + 2 = 3 bis 850, vorzugsweise 6 bis 300,
- a =: 1 bis 800, vorzugsweise 4 bis 300,
- b =: 0 bis 10, vorzugsweise 0,
- c =: 0 bis 10, vorzugsweise 0,
- R¹: unabhängig voneinander gleiche oder verschiedene Reste, ausgewählt aus folgenden Resten gesättigte oder ungesättigte, verzweigte oder unverzweigte Alkylreste mit 1 bis 30 C-Atomen, Alkaryl- oder Arylalkylreste mit 7 bis 30 C-Atomen, Arylreste mit 6 bis 30 C-Atomen, vorzugsweise Alkylreste mit 1 bis 4 C-Atomen oder Phenylrest, insbesondere Methylrest,
- R²: Wasserstoff,
- R³: unabhängig voneinander gleiche oder verschiedene Reste der allgemeinen Formel (Va) 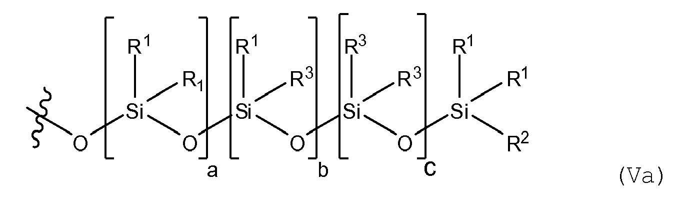
sind, mit
a, b, c und R¹ wie für Formel (V) definiert und
R³ = R¹ oder R³ gemäß der Definition in Formel (V) ,
mit Dialkenylverbindungen der allgemeinen Formel (VI)

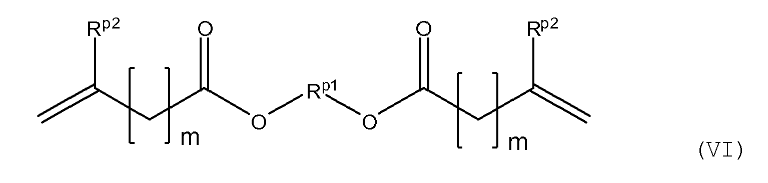

- R^{p2}: Wasserstoff oder Methyl, bevorzugt Wasserstoff,
- m: 0 bis 21, bevorzugt 1 bis 19, besonders bevorzugt 8,
- R^{p1}: ein zweibindiger organischer Rest der allgemeinen Formel (IIIa) oder (IIIb) 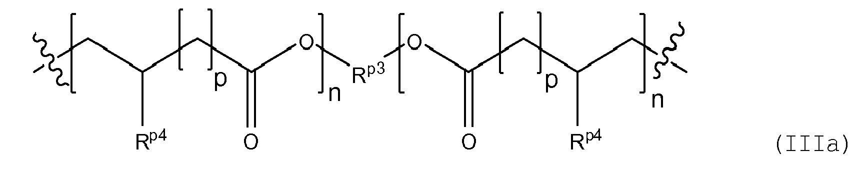 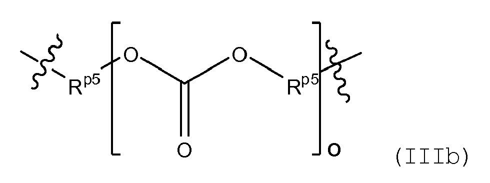
wobei
- n: 1 bis 100, bevorzugt 3 bis 20,
- o: 1 bis 100, bevorzugt 3 bis 20,
- p: 0 bis 17, vorzugsweise 2 bis 10, bevorzugt 3,
- R^{p3}: ein verzweigter oder unverzweigter, gesättigter oder ungesättigter Dialkylest (zweibindiger Alkylrest bzw. Alkylenrest) mit 2 bis 20 C-Atomen,
- R^{p4}: Wasserstoff oder Methyl, bevorzugt Wasserstoff,
- R^{p5}: ein verzweigter oder unverzweigter, gesättigter oder ungesättigter Dialkylrest (zweibindiger Alkylrest bzw. Alkylenrest) mit 2 bis 20 C-Atomen,
mit Dialkenylverbindungen der allgemeinen Formel (VII) 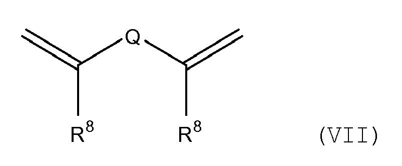 wobei
- R⁸: jeweils unabhängig voneinander Wasserstoff oder Alkyl oder Aryl mit 1 bis 22 C-Atomen, bevorzugt Wasserstoff oder Methyl und
- Q: wie oben definiert,
sowie gegebenenfalls mit Dialkenylverbindungen der allgemeinen Formel (VIII)

CH₂=CHR⁹-R¹⁰-[C=O]ᵢ[O(C₂H_{4-d}R⁴_{d}O)ₑ(C_{f}H_{2f}O)_{g}Mₕ][C=O]ᵢ-R¹⁰-CHR⁹=CH₂ (VIII)

wobei
- R¹⁰: eine zweibindiger, linearer, verzweigter oder cyclischer Alkylrest mit 0 bis 21, bevorzugt 1 bis 18, besonders bevorzugt 1 für i = 0 und 8 für i = 1,
- R⁹: Wasserstoff oder Methyl, bevorzugt Wasserstoff und
- R⁴, d, e, f, g, M, h, und i: wie oben definiert,
durch Hydrosilylierung umgesetzt werden.

Aus der Gruppe der α,ω-Wasserstoffsiloxane der Formel (V) werden vorzugsweise solche mit Kettenlängen von a = 10 bis 100 eingesetzt.

Als Dialkenylverbindungen der allgemeinen Formel (VII) werden vorzugsweise solche eingesetzt, die eine Einheit, ausgewählt aus den nachfolgenden Einheiten aufweisen. 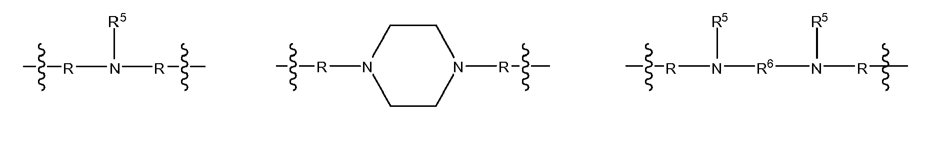 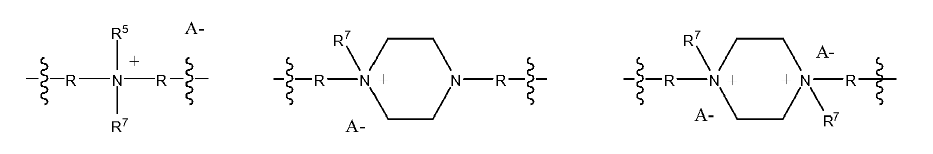 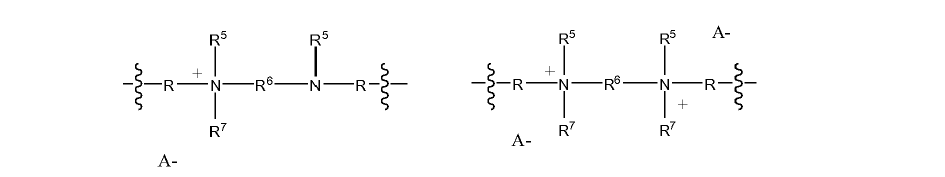 wobei R, R⁵, R⁶, R⁷ und A⁻ wie oben definiert sind. Bevorzugt wird als Dialkenylverbindung der allgemeinen Formel (VII) Diallylamin oder Dimethallylamin eingesetzt.

Als Dialkenylverbindung der Formel (VI) wird vorzugsweise ein Polycarbonatderivat eingesetzt.

Vorzugsweise beträgt das Molverhältnis von Si-H Siloxanen der Formel (V) und der Summe der Dialkenylverbindungen der Formeln (VI), (VII) und ggf. (VIII) bei der Umsetzung von 1,3 : 1 bis 0,7 : 1, bevorzugt zwischen 1,1 : 1 und 0,9 : 1, besonders bevorzugt zwischen 1,03 : 1 und 0,97 : 1 und ganz besonders bevorzugt bei 1 : 1 liegt.

Die Umsetzung kann in Gegenwart oder in Abwesenheit eines Lösemittels durchgeführt werden. Bevorzugte Lösemittel sind organische Lösungsmittel, besonders bevorzugt organische, aprotische Lösungsmittel mit Siedepunkten über 80 °C. Vorzugsweise mit das erfindungsgemäße Verfahren in Abwesenheit von Lösemitteln durchgeführt.

Die Umsetzung der Komponenten kann gleichzeitig oder nacheinander erfolgen. Erfolgt die Umsetzung nacheinander, kann die Reihenfolge der Zugabe der Komponenten, insbesondere der Verbindungen der Formeln (VI), (VII) und ggf. (VIII) beliebig gewählt werden.

Das erfindungsgemäße Verfahren kann kontinuierlich oder diskontinuierlich durchgeführt werden. Vorzugsweise wird das Verfahren diskontinuierlich durchgeführt.

Das erfindungsgemäße Verfahren wird vorzugsweise in Gegenwart eines Edelmetall, bevorzugt Platin aufweisenden Katalysators durchgeführt. Besonders bevorzugt wird das erfindungsgemäße Verfahren in Gegenwart eines Platin-divinyltetra-methyldisiloxan-Komplexes (Karstedt-Katalysator) durchgeführt. Solche Katalysatoren sind z. B. von Johnson-Matthey erhältlich. Der Katalysatorgehalt an der Reaktionsmischung beträgt vorzugsweise von 2 bis 100 Massen-ppm gerechnet als Edelmetall.

Es ist dem Fachmann geläufig, dass die Verbindungen in Form eines Gemisches mit einer im Wesentlichen durch statistische Gesetze geregelten Verteilung vorliegen. Die Werte für die Indices a, b, c, n und o stellen deshalb vorzugsweise Mittelwerte dar.

Es kann unter Umständen notwendig oder wünschenswert sein die Endgruppen zu verkappen, um die reaktiven Endgruppen in inerte Endgruppen zu verwandeln. Dies kann mit dem Fachmann bekannten chemischen Reaktionen erfolgen. Zum Beispiel können am Reaktionsende die Endgruppen analytisch bestimmt werden und durch Zugabe von entsprechenden Mengen monofunktioneller Reaktanden abgesättigt werden.

Die Zugabe von monofunktionellen Reaktanden während der Reaktion kann auch dazu genutzt werden, um die durchschnittliche Kettenlänge des Blockcopolymers zu steuern, so dass zum Beispiel die Viskosität des Endproduktes an die Anforderungen angepasst werden kann.

Es kann vorteilhaft sein, wenn das erhaltene Reaktionsprodukt in einem weiteren Verfahrensschritt mit einem Alkylierungsmittel umgesetzt wird, um vorhandene sekundäre Amine zu quarternieren. Vorzugsweise werden als Alkylierungsmittel Dimethylsulfat oder Methyliodid oder -chlorid eingesetzt.

Verbindungen der allgemeinen Formel (V) sind z. B. erhältlich durch die dem Fachmann bekannten Verfahren der Equilibrierung, wie sie zum Beispiel in US 7,196,153 B2 beschrieben werden.

Verbindungen der allgemeinen Formel (VI) können z. B. durch Veresterung der entsprechenden Polyestervorstufen (z. B. Placcel L212AL oder Placcel CD 220 der Firma Daicel) erhalten werden. Ein solches Verfahren wird z. B. in DE 10 2006 005 100 oder in Beispiel 5 beschrieben.

Verbindungen der allgemeinen Formel (VII) sind z. B. kommerziell erhältlich (z.B. Diallylamin bei Sigma Aldrich) oder erhältlich durch die dem Fachmann allgemein geläufigen Verfahren, wie z.B. in JP 10291967 beschrieben. Ein Beispiel für ein solches Verfahren wird in Beispiel 4 beschrieben.

Verbindungen der allgemeinen Formel (VIII) können durch die dem Fachmann allgemein geläufigen Verfahren zur Herstellung von Polyethern erhalten werden. Basen-katalysierte Verfahren zur Polyethersynthese werden z.B. in "'Nonionic Surfactants', van Os, ed.; Marcel Dekker, 1998" beschrieben. DMC-basierte Verfahren werden z.B. in der US 7,005,552 beschrieben. In Beispiel 1 wird beispielhaft die Herstellung von Polyethern beschrieben. In den Beispielen 2 und 3 wird deren nachträgliche Endverkappung mit terminal ungesättigten Halogeniden beschrieben. Ähnliche Verfahren sind aus US 5,567,858 bekannt. Die Endverkappung mit terminal ungesättigten Säuren wird beispielsweise in DE 10 2006 005 100 beschrieben.

Ein weiterer Gegenstand dieser Erfindung ist die Verwendung der Verbindungen der allgemeinen Formel (I) und der gemäß dem erfindungsgemäßen Verfahren hergestellten Verbindungen der allgemeinen Formel (I) bzw. der gemäß diesem Verfahren hergestellten technischen Mischungen in Schmiermitteln, vorzugsweise als Zusatz in Schmiermitteln. Vorzugsweise weist das Schmiermittel neben Verbindungen der Formel (I) Siliconöl auf.

Ebenfalls Gegenstand der vorliegenden Erfindung sind Schmiermittel, die zumindest ein Blockcopolymere der Formel (I) enthalten. Vorzugsweise weisen solche Schmiermittel zumindest ein erfindungsgemäßes Blockcopolymer der Formel (I) und ein Siliconöl auf oder besteht daraus. Besonders bevorzugt enthält das erfindungsgemäße Schmiermittel von 0,01 bis 5 Massenteile an Blockcopolymere gemäß Formel (I) und 99,9 bis 95 Massenteile Siliconöl bzw. besteht daraus.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### Beispiel 1:

### Herstellung eines Allylpolyethers(MW = 600, 70 % EO-Anteil)

Es wurden 58 g Allylalkohol und KOH in einem Druckreaktor vorgelegt und auf 120 °C aufgeheizt. Anschließend wurden 120 g Styroloxid über 3 Stunden zudosiert. Nach einer Nachreaktionszeit von 1 h wurden 440 g Ethylenoxid bei 100 °C über 3 Stunden zudosiert. Nach einer weiteren Nachreaktionszeit von 1 h bei 100 °C und Abkühlen auf 80 °C wurde das Reaktionsgemisch mit Phosphorsäure neutralisiert, filtriert und abgefüllt.

### Beispiel 2:

### Herstellung eines Diallylpolyethers

Der in Beispiel 1 hergestellte Allylpolyether (1 mol) wurde vorgelegt, der Reaktor bei einem (Vakuum von 10 bis 20 mbar entgast und mit Stickstoff belüftet. Unter Eiskühlung wurden 1,5 mol kalte 50%ige Natronlauge hinzugegeben, wobei die Temperatur 25 bis 30 °C nicht übersteigen durfte. Danach wurden 1,7 mol Allylchlorid innerhalb von 90 min zugetropft. Die Reaktion war stark exotherm. Durch Regelung der Zutropfgeschwindigkeit wurde die Temperatur knapp unterhalb des Siedepunkts von Allylchlorid gehalten (< 45 °C). Es entstand eine schwachgelbe bis orangefarbene Suspension.

Nach Beendigung der Zugabe wurde eine Stunde unter Rückfluss bei 60 °C erhitzt. Danach wurde das nicht umgesetzte Allylchlorid bei 60 °C und einem Druck von 100 mbar abdestilliert. Die Suspension wurde anschließend filtriert.

### Beispiel 3:

### Herstellung eines Allylmethallylpolyethers

Der in Beispiel 1 hergestellte Allylpolyether (1 mol) wurde mit 1 L einer 1 M-Kalium-t-Butanolat-Lösung in t-Butanol bei 50 °C 1 Stunde lang unter schwachem Vakuum gerührt und dabei das t-Butanol langsam abdestilliert. Anschließend wurde 1,5 Mol Methallylchlorid langsam zugetropft und bei 75 °C 2 Stunden nachreagiert. Abschließend wurden die flüchtigen Bestandteile im Vakuum abdestilliert und das ausgefallene Salz abfiltriert. Es wurde eine klare, leicht gelbliche Flüssigkeit gewonnen.

### Beispiel 4:

### Herstellung eines Dimethallylamins

Cocos-diethanolamin (1 mol) wurde mit 1 L einer 1 M-Kalium-t-Butanolat-Lösung in t-Butanol bei 50 °C 1 Stunde lang unter schwachem Vakuum gerührt und dabei das t-Butanol langsam abdestilliert. Anschließend wurden 1,5 mol Methallylchlorid langsam zugetropft und bei 75 °C 2 Stunden nachreagiert. Abschließend wurden die flüchtigen Bestandteile im Vakuum abdestiliert und das ausgefallene Salz abfiltriert. Es wurde eine klare, gelbe Flüssigkeit gewonnen.

### Beispiel 5:

### Herstellung eines difunktionellen Polyesters

In einem Mehrhalsrundkolben wurden 3,0 mol Polyesterdiol PLACCEL L212AL (Firma Daicel) und 6,0 mol Undecylensäure vorgelegt und auf 60 °C erhitzt. Nach Zugabe von 120 g Novozym 435 (Novozymes A/S, Bagsvaerd, Dänemark) wurde Vakuum angelegt (20 mbar) und das freiwerdende Reaktionswasser abdestilliert. Nach 24 Stunden wurde das immobilisierte Enzym abfiltriert. Das Filtrat lieferte das Produkt ohne weitere Aufarbeitung als farblosen Feststoff.

### Beispiel 6:

### Herstellung eines difunktionellen Polycarbonats

In einem Mehrhalsrundkolben wurden 3,5 mol Polycarbonatdiol PLACCEL CD220 (Firma Daicel) und 7,0 mol Undecylensäure vorgelegt und auf 60 °C erhitzt. Nach Zugabe von 200 g Novozym 435 wurde Vakuum angelegt (20 mbar) und das freiwerdende Reaktionswasser abdestilliert. Nach 24 Stunden wurde das immobilisierte Enzym abfiltriert. Das Filtrat lieferte das Produkt ohne weitere Aufarbeitung als farblosen Feststoff.

### Beispiel 7:

### Synthese eines Blockcopolymers

In einem Dreihalskolben wurden 2,8 mol einer 1 : 1 : 1-molaren Mischung des im Beispiel 2 hergestellten Polyethers, des im Beispiel 4 hergestellten Dimethallylamins und des im Beispiel 5 hergestellten difunktionellen Polyesters zusammen mit 3 mol eines α,ω-SiH Siloxans (N = 50, SiH = 0,55) und 10 Massen-ppm Platin-Katalysator (Karstedt-Katalysator, Johnson-Matthey) vorgelegt und unter Rühren auf 90 °C aufgeheizt. Nach 1 h Nachreaktion bei 120 °C wurde der SiH-Wert bestimmt und eine entsprechende Menge des Allylpolyethers aus Beispiel 1 zugegeben, bis kein SiH-Wert mehr nachweisbar war. Das klare Produkt wurde abschließend unter Ölpumpenvakuum (< 5 mbar) destilliert, filtriert und abgefüllt.

### Beispiel 8:

### Synthese eines Blockcopolymers

In einem Dreihalskolben wurden 2,8 mol einer 1 : 1 : 1-molaren Mischung des im Beispiel 3 hergestellten Polyethers, Diallylamin und des im Beispiel 5 hergestellten difunktionellen Polyesters zusammen mit 3 mol eines α,ω-SiH Siloxans (N = 50, SiH = 0,55) und 10 ppm Platin-Katalysator vorgelegt und unter Rühren und Rückfluss auf 90 °C aufgeheizt. Nach 1 h Nachreaktion bei 120 °C wurde der SiH-Wert bestimmt und eine entsprechende Menge des Allylpolyethers aus Beispiel 1 zugegeben, bis kein SiH-Wert festzustellen war. Das klare Produkt wurde abschließend unter Ölpumpenvakuum (< 5 mbar) destilliert, filtriert und abgefüllt.

### Beispiel 9:

### Synthese eines Blockcopolymers

In einem Dreihalskolben wurden 2,8 mol einer 1 : 1 : 1-molaren Mischung des im Beispiel 3 hergestellten Polyethers, Diallylamin und des im Beispiel 6 hergestellten difunktionellen Polycarbonats zusammen mit 3 mol eines α,ω-SiH Siloxans (N = 100, SiH = 0,55) und 10 ppm Platin-Katalysator vorgelegt und unter Rühren und Rückfluss auf 90 °C aufgeheizt. Nach 1 h Nachreaktion bei 120 °C wurde der SiH-Wert bestimmt und eine entsprechende Menge des Allylpolyethers aus Beispiel 1 zugegeben, bis kein SiH-Wert festzustellen war. Das klare Produkt wurde anschließend unter Ölpumpenvakuum (< 5 mbar) destilliert, filtriert und abgefüllt.

### Beispiel 10:

### Synthese eines Blockcopolymers

In einem Dreihalskolben wurden 100 mL Toluol, sowie 2,8 mol einer 1 : 1-molaren Mischung von Diallylamin und des im Beispiel 5 hergestellten difunktionellen Polyesters zusammen mit 3 mol eines α,ω-SiH Siloxans (N = 50, SiH = 0,55) und 10 Massen-ppm Platin-Katalysator (Karstedt-Katalysator, Johnson-Matthey) vorgelegt und unter Rühren und Rückfluss auf 90 °C aufgeheizt. Nach 1 h Nachreaktion bei 120 °C wurde der SiH-Wert bestimmt und eine entsprechende Menge Hexenol zugegeben, bis kein SiH-Wert festzustellen war. Das klare Produkt wurde anschließend unter Ölpumpenvakuum (< 5 mbar) destilliert, filtriert und abgefüllt.

### Beispiel 11:

### Synthese eines Blockcopolymers

In einem Dreihalskolben wurden 100 mL Toluol, sowie 2,8 mol einer 1 : 1-molaren Mischung des im Beispiel 4 hergestellten Dimethallylamins und des im Beispiel 5 hergestellten difunktionellen Polyesters zusammen mit 3 mol eines α,ω-SiH Siloxans (N = 50, SiH = 0,55) und 10 Massen-ppm Platin-Katalysator (Karstedt-Katalysator, Johnson-Matthey) vorgelegt und unter Rühren und Rückfluss auf 90 °C aufgeheizt. Nach 1 h Nachreaktion bei 120 °C wurde der SiH-Wert bestimmt und eine entsprechende Menge Hexenol zugegeben, bis kein SiH-Wert festzustellen war. Das klare Produkt wurde anschließend unter Ölpumpenvakuum (< 5 mbar) destilliert, filtriert und abgefüllt.

### Beispiel 12:

### Anwendungsbeispiele

Die anwendungstechnische Austestung erfolgte mit einer Mini-Traction-Machine (MTM2) erhältlich von der Firma PCS-Instruments, Ltd. (London). Damit wurden die Reibungskoeffizenten des reinen Blockcopolymers und von additiviertem Siliconöl bei unterschiedlichen Temperaturen, hohen Drücken und niedrigen Drehgeschwindigkeiten (entspricht Grenzschmierbereich) ermittelt und mit nicht additiviertem Siliconöl verglichen. Die erhaltenen Ergebnisse sind in Tabelle 1 zusammengefasst.

**Tabelle 1:**

| Kraft 75N, Geschwindigkeit 10 mm/s | | | |
|---|---|---|---|
| | Reibungskoeffizient Bei 40 °C | Reibungskoeffizient Bei 80 °C | Reibungskoeffizient Bei 110 °C |
| Siliconöl | mittel | Hoch | Sehr hoch |
| Blockcopolymer nach Beispiel 8 | mittel | mittel | mittel |
| Siliconöl + 1 % Blockcopolymer nach Beispiel 7 | niedrig | niedrig | Niedrig |
| Siliconöl + 1 % Blockcopolymer nach Beispiel 8 | Sehr niedrig | Sehr niedrig | niedrig |
| Siliconöl + 3 % Blockcopolymer nach Beispiel 8 | Sehr niedrig | Sehr niedrig | Sehr niedrig |
| Siliconöl + 1 % Blockcopolymer nach Beispiel 9 | Sehr niedrig | Sehr niedrig | niedrig |

Die Ergebnisse der Untersuchungen zeigen, dass die erfindungsgemäßen Blockcopolymere als Additive den Reibungskoeffizienten von Siliconöl im Grenzschmierbereich deutlich verbessern.

## Patentansprüche

1. Lineare Polyester-Polysiloxan-Blockcopolymere der allgemeinen Formel (I)
[(-S-P-)ₚ(-S-Q-)_{q}(-S-T-)ₜ]ᵣ (I)
in denen die Einheiten (-S-P-), (-S-Q-) und (-S-T-) in beliebiger Reihenfolge miteinander verknüpft sind und in denen
p = 1 bis 10,
q = 1 bis 10,
t = 0 bis 10,
r = 1 bis 100
und r*p > 3 und r*q > 3 ist, **dadurch gekennzeichnet, dass** S eine zweiwertige Siloxan-Einheit der allgemeinen Formel (II) 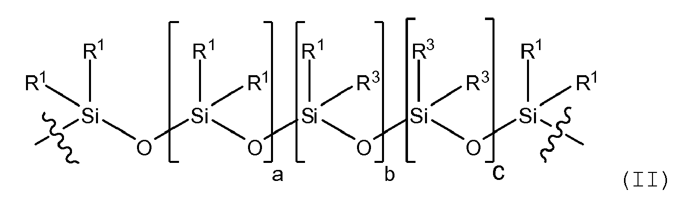 wobei
N = a + b + c + 2 = 3 bis 850,
a = 1 bis 800,
b = 0 bis 10,
c = 0 bis 10,
R¹ unabhängig voneinander gleich oder verschieden und aus folgender Gruppe ausgewählt sind gesättigte oder ungesättigte, verzweigte oder unverzweigte Alkylreste mit 1 bis 30 C-Atomen, Alkaryl- oder Arylalkylreste mit 7 bis 30 C-Atomen, Arylreste mit 6 bis 30 C-Atomen,
R³ unabhängig voneinander gleiche oder verschiedene Reste der allgemeinen Formel (IIa) 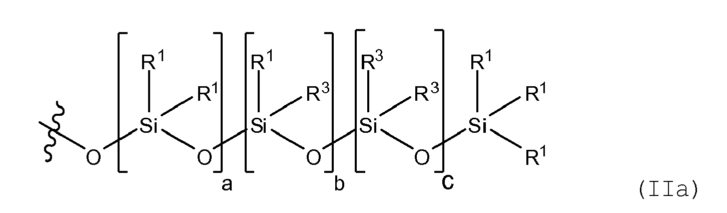
mit
a, b, c und R¹ wie für Formel (I) definiert und R³ = R¹ oder R³ gemäß der Definition in Formel (I),
P eine zweiwertige Polyester-Einheit der allgemeinen Formel (III) 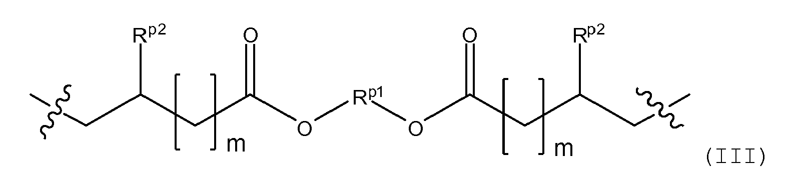
wobei
R^{p2} Wasserstoff oder Methyl,
m 0 bis 21,
R^{p1} ein zweibindiger organischer Rest der allgemeinen Formel (IIIa) 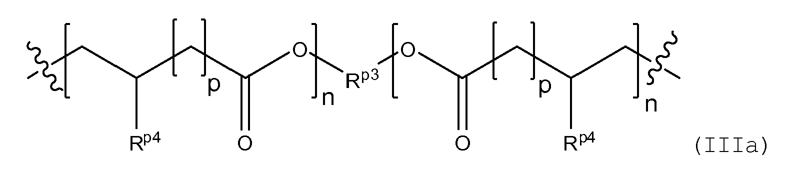 oder (IIIb) 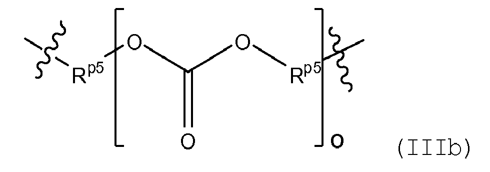
wobei
n = 1 bis 100,
o = 1 bis 100,
p = 0 bis 17,
R^{p3} ein zweibindiger, verzweigter oder unverzweigter, gesättigter oder ungesättigter Alkylrest mit 2 bis 20 C-Atomen,
R^{p4} Wasserstoff oder Methyl,
R^{p5} ein zweibindiger, verzweigter oder unverzweigter, gesättigter oder ungesättigter Alkylrest mit 2 bis 20 C-Atomen,
Q ein zweibindiger, geradkettiger oder cyclischer, neutraler oder positiv geladener Alkylrest, der gegebenenfalls von Sauerstoffatomen unterbrochen ist und mindestens von einem, gegebenenfalls alkylsubstituierten, Stickstoffatom unterbrochen ist oder mindestens eine Aminogruppe trägt,
T eine zweiwertige Polyether-Einheit der allgemeinen Formel (IV)
-R^{t}[C=O]ᵢ[O(C₂H_{4-d}R⁴_{d}O)ₑ(C_{f}H_{2f}O)_{g}Mₕ] [C=O]ᵢR^{t}- (IV)
wobei
R^{t} ein zweibindiger, linearer, verzweigter oder cyclischer Alkylrest mit 2 bis 23 C-Atomen,
R⁴ jeweils unabhängig voneinander Wasserstoff oder gesättigt oder ungesättigt Alkylrest oder Arylrest mit 1 bis 22 C-Atomen, der gegebenenfalls Sauerstoff- oder Stickstoffatome enthalten kann und
d jeweils unabhängig voneinander 0 bis 2,
e 0 bis 50,
f 2 bis 4,
g 0 bis 50, mit der Maßgabe, dass e + g > 0,
M gleich oder verschieden, ein zweibindiger, gesättigter oder ungesättigter, linearer, verzweigter oder cyclischer, gegebenenfalls von Sauerstoff- oder Stickstoffatomen oder Carboxylgruppen unterbrochener und gegebenenfalls substituierter Kohlenwasserstoffrest an beliebiger Position innerhalb T,
h 0, 1 oder 2 und
i 0 oder 1 ist.

2. Lineare Blockcopolymere nach Anspruch 1, **dadurch gekennzeichnet, dass** Q ausgewählt ist aus der Gruppe der Einheiten 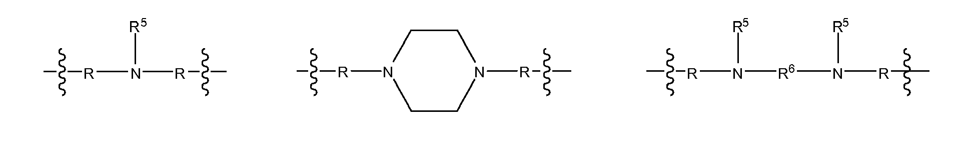 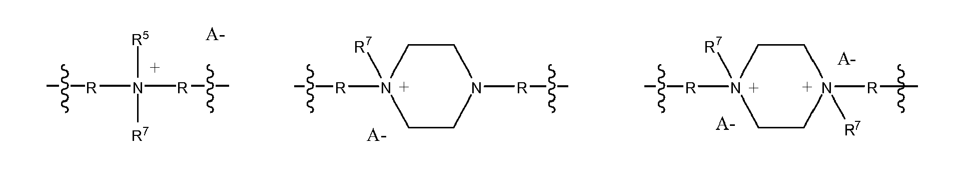 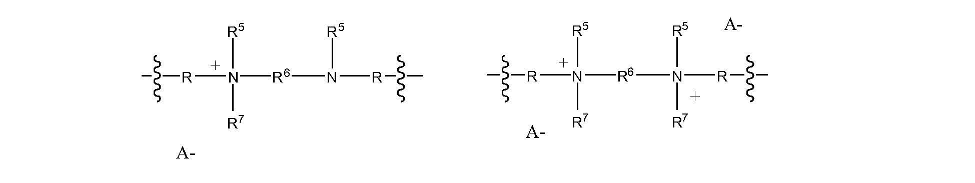 wobei
R eine zweiwertige, geradkettige, verzweigte oder cyclische, gegebenenfalls von Sauerstoffatomen unterbrochene Alkylkette,
R⁵ jeweils unabhängig voneinander Alkyl oder Aryl mit 1 bis 22 C-Atomen ist, oder ein einwertiger Sauerstoff-und/oder Stickstoffatome enthaltender Kohlenwasserstoffrest ist,
R⁶ ein zweiwertiger, gegebenenfalls verzweigter, gegebenenfalls Sauerstoff- und/oder Stickstoffatome enthaltender Kohlenwasserstoffrest ist,
R⁷ jeweils unabhängig voneinander Wasserstoff oder Alkyl oder Aryl mit 1 bis 22 C-Atomen ist,
A⁻ ein Gegenion zu den positiven Ladungen an den quartären Stickstoffgruppen ist.

3. Lineare Blockcopolymere nach Anspruch 2, **dadurch gekennzeichnet, dass** Q ausgewählt ist aus Einheiten der Formel (IX), 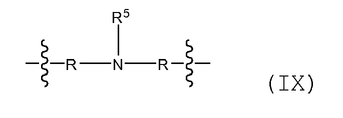 mit
R⁵ ein Wasserstoff oder Alkylrest und R jeweils ein Propyl- oder 2-Methylpropylrest.

4. Lineare Blockcopolymere nach zumindest einem der Ansprüche 1 bis 3, **dadurch gekennzeichnet, dass** sie Einheiten T aufweisen, mit e = 0, f = 2, g = 1 bis 50 und h = 0 oder d = 1, e = 1 bis 50, g = 0, h = 0 und R³ = Methyl.

5. Lineare Blockcopolymere nach zumindest einem der Ansprüche 1 bis 4, **dadurch gekennzeichnet, dass** sie Einheiten T aufweisen, mit R^{t} = 3 C-Atome aufweisender Alkylrest und i = 0 oder R^{t} = 10 C-Atome aufweisender Alkylrest und i = 1.

6. Verfahren zur Herstellung von Blockcopolymeren gemäß der allgemeinen Formel (I) **dadurch gekennzeichnet, dass** zu deren Herstellung Si-H Siloxane der allgemeinen Formel (V) 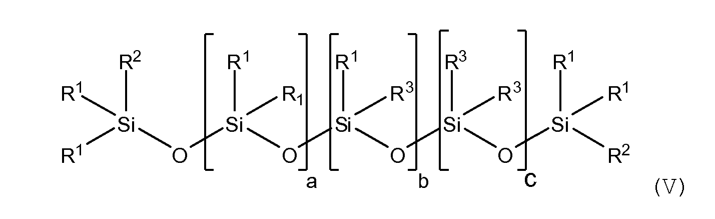 wobei
N = a + b + c + 2 = 3 bis 850,
a = 1 bis 800,
c = 0 bis 10,
d = 0 bis 10,
R¹ unabhängig voneinander gleich oder verschieden und aus folgenden Resten ausgewählt sind gesättigte oder ungesättigte, verzweigte oder unverzweigte Alkylreste mit 1 bis 30 C-Atomen, Alkaryl- oder Arylalkylreste mit 7 bis 30 C-Atomen, Arylreste mit 6 bis 30 C-Atomen,
R² Wasserstoff,
R³ unabhängig voneinander gleiche oder verschiedene Reste der allgemeinen Formel (Va) 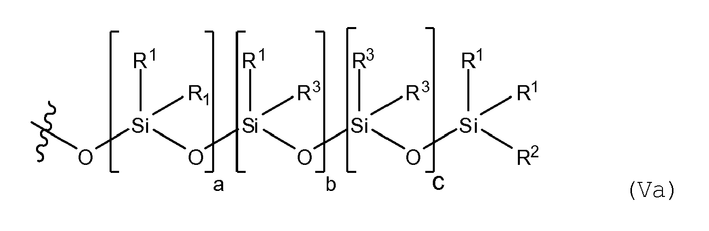
sind, mit
a, b, c und R¹ wie für Formel (V) definert und
R³ = R¹ oder R³ gemäß der Definiton in Formel (V),
mit Dialkenylverbindungen der allgemeinen Formel (VI) 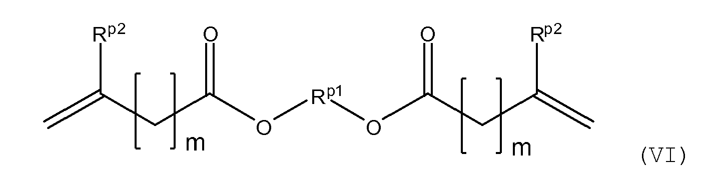
wobei
R^{p2} Wasserstoff oder Methyl,
m 0 bis 21,
R^{p1} ein organischer Rest der allgemeinen Formel (IIIa) 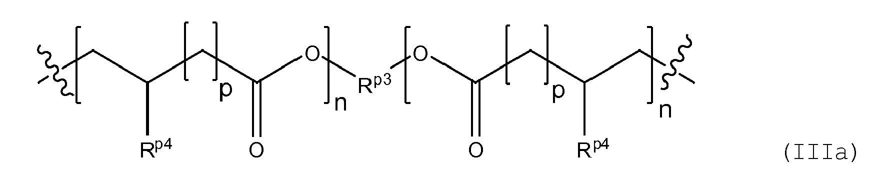 oder (IIIb) 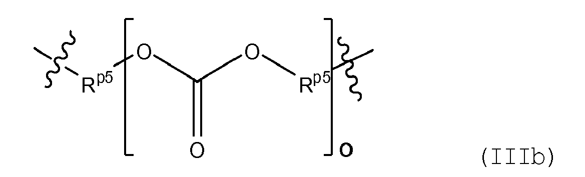
wobei
n 1 bis 100,
o 1 bis 100,
p 0 bis 17,
R^{p3} ein zweibindiger, verzweigter oder unverzweigter, gesättigter oder ungesättigter Alkylrest mit 2 bis 20 C-Atomen,
R^{p4} Wasserstoff oder Methyl,
R^{p5} ein zweibindiger, verzweigter oder unverzweigter, gesättigter oder ungesättigter Alkylrest mit 2 bis 20 C-Atomen,
mit Dialkenylverbindungen der allgemeinen Formel (VII) 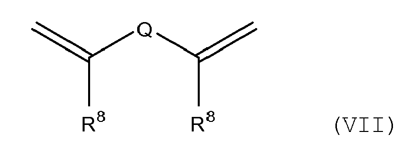 wobei
R⁸ jeweils unabhängig voneinander Wasserstoff oder Alkyl oder Aryl mit 1 bis 22 C-Atomen,
Q ein zweibindiger, geradkettiger oder cyclischer, neutraler oder positiv geladener Alkylrest, der gegebenenfalls von Sauerstoffatomen unterbrochen ist und mindestens von einem, gegebenenfalls alkylsubstituierten, Stickstoffatom unterbrochen ist oder mindestens eine gegebenenfalls alkylsubstituierte Aminogruppe trägt,
sowie optional mit Dialkenylverbindungen der allgemeinen Formel (VIII)
CH₂=CHR⁹-R¹⁰-[C=O]ᵢ[O(C₂H_{4-d}R⁴_{d}O)ₑ(C_{f}H_{2f}O)_{g}Mₕ][C=O]ᵢ-R¹⁰CHR⁹=CH₂ (VIII)
wobei
R¹⁰ ein zweibindiger, linearer, verzweigter oder cyclischer Alkylrest mit 0 bis 21,
R⁹ Wasserstoff oder Methyl und
R⁴, d, e, f, g, M, h, und i wie in Anspruch 1 definiert, in einer Hydrosilylierung umgesetzt werden.

7. Verfahren nach Anspruch 6, **dadurch gekennzeichnet, dass** das Molverhältnis von Si-H Siloxanen der Formel (V) zur Summe der Dialkenylverbindungen der Formeln (VI), (VII) und ggf. (VIII) von 1,3 : 1 bis 0,7 : 1 liegt.

8. Verfahren nach Anspruch 6 oder 7, **dadurch gekennzeichnet, dass** als Verbindung der Formel (VII) Diallylamin oder Dimethallylamin eingesetzt wird.

9. Verfahren nach zumindest einem der Ansprüche 6 bis 8, **dadurch gekennzeichnet, dass** das erhaltene Reaktionsprodukt in einem weiteren Verfahrensschritt mit einem Alkylierungsmittel umgesetzt wird.

10. Verfahren nach Anspruch 9 **dadurch gekennzeichnet, dass** das Alkylierungsmittel Dimethylsulfat oder Methyliodid oder -chlorid ist.

11. Verwendung der Blockcopolymere der Formel (I) gemäß einem der Ansprüche 1 bis 5 als Zusatz in Schmiermitteln.

12. Verwendung gemäß Anspruch 11, **dadurch gekennzeichnet, dass** das Schmiermittel neben Blockcopolymeren der Formel (I) Silconöl aufweist.

13. Schmiermittel enthaltend zumindest ein Blockcopolymer gemäß zumindest einem der Ansprüche 1 bis 5.

14. Schmiermittel gemäß Anspruch 13, **dadurch gekennzeichnet, dass** es zumindest ein Blockcopolymer der Formel (I) und ein Siliconöl enthält.

15. Schmiermittel gemäß Anspruch 13 oder 14, **dadurch gekennzeichnet, dass** es von 0,1 bis 5 Massenteile Blockcopolymere der Formel (I) und 99,9 bis 95 Massenteile Siliconöl enthält.
